(19) Europäisches Patentamt
European Patent Office
Office européen des brevets

(11) **EP 4 208 307 B1**

(12) **EUROPEAN PATENT SPECIFICATION**

(45) Date of publication and mention
of the grant of the patent:
**12.06.2024 Bulletin 2024/24**

(21) Application number: **21786726.6**

(22) Date of filing: **31.08.2021**

(51) International Patent Classification (IPC):
**B23F 19/00** $^{(2006.01)}$     **G05B 19/18** $^{(2006.01)}$

(52) Cooperative Patent Classification (CPC):
**G05B 19/186; B23F 19/002;** G05B 2219/45214

(86) International application number:
**PCT/US2021/071320**

(87) International publication number:
**WO 2022/051748 (10.03.2022 Gazette 2022/10)**

(54) **PSYCHOACOUSTIC GEAR TOOTH FLANK FORM MODIFICATION**

VERÄNDERUNG DER FLANKENFORM VON PSYCHOAKUSTISCHEN ZAHNRÄDERN

MODIFICATION DE FORME DE FLANC DE DENT D'ENGRENAGE PSYCHOACOUSTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.09.2020 US 202063073557 P**

(43) Date of publication of application:
**12.07.2023 Bulletin 2023/28**

(73) Proprietor: **The Gleason Works Rochester, NY 14607 (US)**

(72) Inventors:
• **STADTFELD, Hermann, J.**
**54531 Manderscheid (DE)**

• **DONNAN, Robert, T.**
**Macedon, NY 14502 (US)**

(74) Representative: **Leinweber & Zimmermann Patentanwalts-PartG mbB European Patent Attorneys Viktualienmarkt 8 80331 München (DE)**

(56) References cited:
**EP-A1- 0 784 525        WO-A1-2018/187820**
**US-A1- 2014 256 223    US-B2- 6 712 566**

**Description**

Field of the Invention

The invention is directed to the manufacture of bevel gears by a generating method to produce tooth flank surface modifications in order to achieve a psychoacoustic noise reduction of a gear set.

Background of the Invention

In the production of gears, especially bevel and hypoid gears, two types of processes are commonly employed, generating processes and non-generating processes.

Generating processes can be divided into two categories, face milling (intermittent indexing) and face hobbing (continuous indexing). In generating face milling processes, a rotating tool is fed into the workpiece to a predetermined depth. Once this depth is reached, the tool and workpiece are then rolled together in a predetermined relative rolling motion, known as the generating roll, as though the workpiece were rotating in mesh with the theoretical generating gear, the teeth of the theoretical generating gear being represented by the stock removing surfaces of the tool. The profile shape of the tooth is formed by relative motion of the tool and workpiece during the generating roll. Usually, the tool is a cup-shaped grinding wheel or a cutting tool comprising a disc-shaped cutter head with a plurality of cutting blades projecting from a face of the cutter head.

Generating grinding for bevel ring gears or pinions presents the grinding wheel as a tooth of the theoretical generating gear, while the workpiece rolls on the generating gear tooth to finish the profile and lead of the workpiece tooth surface. During the generating roll, a computer controlled (e.g. CNC) free form machine, such as disclosed in U.S. Patent No. 6,712,566

for example, changes its axes positions in several hundred steps, for example, with each step represented by up to three linear axis positions (e.g. X, Y, Z) and up to three rotational axis positions (e.g. tool C, workpiece A, pivot B) of the machine. In generating grinding of bevel and hypoid gears, five axes are commonly required (the grinding wheel (i.e. axis C) rotates independently), which change their axis positions several hundred times during the rolling process for each tooth surface.

In generating face hobbing processes, the tool and work gear rotate in a timed relationship and the tool is rolled (e.g. from toe to heel) thereby forming all tooth slots in a single generating roll of the tool. After the heel is reached, the generating roll is finished.

Non-generating processes, either intermittent indexing or continuous indexing, are those in which the profile shape of a tooth on a workpiece is produced directly from the profile shape on the tool. The tool is fed into the workpiece and the profile shape on the tool is imparted to the workpiece. While no generating roll is employed, the concept of a theoretical generating gear on the form of a "crown gear" is applicable in non-generating processes. The crown gear is that theoretical gear whose tooth surfaces are complementary with the tooth surfaces of the workpiece in non-generating processes. Therefore, the cutting blades on the tool represent the teeth of the crown gear when forming the tooth surfaces on the non-generated workpiece.

The relationship between the workpiece and generating gear can be defined by a group of parameters known as basic machine settings. These basic settings communicate a sense of size and proportion regarding the generating gear and the work piece and provide a common starting point for gear design thus unifying design procedures among many models of machines. The basic settings totally describe the relative positioning between the tool and workpiece at any instant.

Basic machine settings for forming gears are known in the art and one such disclosure of them can be found in Goldrich, "CNC Generation of Spiral Bevel and Hypoid Gears: Theory and Practice" The Gleason Works, Rochester, NY, 1990. In this publication, representing the closest prior art currently known to the applicants, basic machine settings are identified as follows: (1) the radial, S, which is the distance between the cradle axis and the tool axis; (2) the tilt angle, Pi, which defines the angle between the cradle axis and tool axis; (3) the swivel angle, Pj, which defines the orientation of the tool axis relative to a fixed reference on the cradle; (4) the cradle angle, q, which defines the angular position of the tool about the cradle axis; (5) the root angle, $\Sigma$, which sets forth the orientation of the work support relative to the cradle axis; (6) the sliding base, Xb, which is the distance from the machine center to the apparent intersection of the work and cradle axis; (7) the head setting, Xp, which is a distance along the work axis from the apparent intersection of the work and cradle axis to a point located a fixed distance from the workpiece; (8) work offset, Em, which defines the distance between the work axis the cradle axis; (9) rotational position of the workpiece, Wg; and, (10) rotational position of the tool, Wt, which is used in the case of face hobbing. In addition, in generating processes, it is necessary to know the ratio-of-roll, Ra, which is the ratio of the rotation of the work piece to the rotation of the cradle.

It is well known in the gear industry that the area of bearing contact between tooth surfaces in mesh should be limited to keep the contact area within the boundaries of the teeth, thus preventing the tooth surfaces from coming into contact at their edges which can lead to tooth damage and/or gear failure.

In order to limit the area of tooth contact, it is necessary to modify a theoretical conjugate tooth flank surface by introducing modifications, such as "crowning" for example, to limit the contact area under no load or load to provide insensitivity to things such as gear housing tolerances, inaccuracies in the gear members and assembly, as well as deflections. Thus, instead of the entire tooth surface of mating flanks coming into contact during rolling, as would be the theoretical case with completely conjugate tooth flanks and a drive system having zero deflections and tolerances, mating flanks that have been modified usually contact one another at one point or along a line. Hence, the mating flank surfaces are conjugate only at this point or along the line. Contact is limited to an area of a size such that the contact area will remain within the tooth boundaries despite the effects of actual deflections, tolerances and load.

However, with crowning, for example, comes motion error introduced by non-conjugate members rolling in mesh with one another. And with motion error comes noise.

Generally speaking, psychoacoustic is the study of sound perception. Psychoacoustic sound pattern optimization has experienced a growing interest in recent years with one area of study being the application of psychoacoustics to the noise emitted by gears. For example, theoretical investigations were conducted by Brecher et al. comprising providing, from tooth-to-tooth, individually different flank form changes to reduce the tonality. The tonality is used as a psychoacoustic measure in order to judge how gear noise is received by the human ear and evaluated by the brain. Gear noise might be perceived as non-disturbing or not noticeable even if a sound pressure measurement or a single flank test indicates that the particular gearset is loud and disturbing.

One known type of tooth-to-tooth flank form change is topography scattering which introduces spiral angle and pressure angle changes on the flank surfaces of the gears to be optimized. The spiral angle and pressure angle changes have different amounts from tooth to tooth. Random distributions as well as normal distributions have been applied in order to quantify the changing spiral angle and pressure angle amounts from tooth to tooth.

Applying spiral angle changes as well as pressure angle changes by using modified machine settings leads to tooth thickness and tooth indexing errors. In the case of flank form corrections that are different from tooth to tooth and in the case that both flanks of one slot are ground at the same time (i.e. completing), it becomes very difficult or even impossible to control tooth thickness and indexing errors. It is also a disadvantage that a complete set of machine settings (i.e. basic settings) has to be transferred for each tooth slot to the machine and compiled to a part program. For example, for a seventeen (17) tooth bevel pinion, this requires 17 times the amount of data processing and data storage and it makes closed loop feedback, such as from a coordinate measuring machine, more complex because the closed loop feedback has to be applied to 17 sets of basic setting for one single 17 tooth pinion.

The state of the art psychoacoustic optimized gearsets show the mentioned tooth thickness and indexing errors. These errors reduce the gear quality by several classes and shows a negative influence to the load carrying capacity of a gearset.

The flank form scattering of the state of the art psychoacoustic optimized gearsets also show deviations of the flank surface corner points in the +/- 5 to +/-10 micron range between the teeth of one pinion or ring gear. Flank form deviations in this magnitude are not acceptable to most gear manufacturers because such deviations can bring about contact patterns that change from tooth pair to tooth pair which brings the risk of tooth corner load concentrations. Tooth corner load concentrations can cause a premature failure of a gearset under load.

Surface scattering can reduce the harmonic frequency levels in a single flank test and create side bands in the frequency spectrum between the harmonic frequencies. As a result, noise levels in a vehicle having a gearset with targeted surface scattering will be less recognizable by a human driver at the noise critical speeds and loads. However, the surface scattering should not reduce the gear quality level regarding indexing and runout errors, and it also should not cause individual flank form errors which result in inconsistent contact pattern from one meshing pair of teeth to the next. Furthermore, targeted flank form deviations have to be designed in order to avoid edge contact along the boundaries of the teeth. Edge contact can cause surface damages which could result in tooth fracture in case of high load applications. A further goal for a psychoacoustic motivated flank form scattering is to provide gearset insensitivity to small variations in the shaft positions. In order for closed loop correction and easy grinding machine input data handling, it is desirable to have only one set of basic settings for one pinion or ring gear instead of one set of settings for each tooth slot.

EP 0 784 525 A1 discloses a method of producing tooth flank surface modifications involving active setting for each of the machine settings of a gear producing machine performing the method.

Summary of the invention

The invention provides a method with the features of claim 1. This

comprises a method of producing a tooth flank surface on gear teeth by controlled removal of stock material from a work gear with a tool with the work gear and the tool being movable with respect to one another along and/or about a plurality of axes. The tool and work gear are engaged with one another and then moved relative to one another in a generating motion along and/or about the plurality of axes, Stock material is removed from the work gear to produce the tooth surface on the work gear. Wherein the generating motion along and/or about the plurality of axes comprises motion along and/or about at least one of the axes with the motion being defined by a function comprising a first level component and a second level component. The first level component defining a maximum flank form deviation amplitude for each tooth of the work gear, and the second level component defining a modification of the tooth surface of each tooth of the work gear.

Brief Description of the Drawings

Figure 1 schematically illustrates a six-axis free-form bevel gear grinding machine.

Figure 2 shows a three-dimensional view of a bevel gear tooth.

Figure 3 illustrates modified material removal along the path of tooth contact showing a first order function, a sinusoidal function and a third order function.

Figure 4 shows a coordinate measurement result of one tooth having a sinusoidal second level function.

Figure 5 shows a normal distribution as a first level function.

Figure 6 is a simplified two-dimensional depiction of a pressure angle change.

Figure 7 shows a split sine function with different frequency and amplitude in the two sections.

Figure 8 shows the second level function of Figure 7 with toe and heel dwell sections around center of roll.

Detailed Description of the invention

The terms "invention," "the invention," and "the present invention" used in this specification are intended to refer broadly to all of the subject matter of this specification and any patent claims below. Statements containing these terms should not be understood to limit the subject matter described herein or to limit the meaning or scope of any patent claims below. Furthermore, this specification does not seek to describe or limit the subject matter covered by any claims in any particular part, paragraph, statement or drawing of the application. The subject matter should be understood by reference to the entire specification, all drawings and any claim below. The invention is capable of other constructions and of being practiced or being carried out in various ways. Also, it is understood that the phraseology and terminology used herein is for the purposes of description and should not be regarded as limiting.

The use of "including", "having" and "comprising" and variations thereof herein is meant to encompass the items listed thereafter and equivalents thereof as well as additional items. The use of letters to identify elements of a method or process is simply for identification and is not meant to indicate that the elements should be performed in a particular order. As used herein, the singular forms "a", "an" and "the" are intended to include the plural forms as well, unless the context clearly indicates otherwise and the term "and/or" includes any and all combinations of one or more of the associated listed items.

Although references may be made below to directions such as upper, lower, upward, downward, rearward, bottom, top, front, rear, etc., in describing the drawings, these references are made relative to the drawings (as normally viewed) for convenience. These directions are not intended to be taken literally or limit the present invention in any form. In addition, terms such as "first", "second", "third", etc., are used to herein for purposes of description and are not intended to indicate or imply importance or significance unless explicitly stated.

The details of the invention will now be discussed with reference to the accompanying drawings which illustrate the invention by way of example only. In the drawings, similar features or components will be referred to by like reference numbers. The size and relative sizes of certain aspects or elements may be exaggerated for clarity or detailed explanation purposes. For a better understanding of the invention and ease of viewing, doors, casings, internal or external guarding, etc. may have been omitted from the drawings.

The inventive modifications are applicable to a workpiece gear manufactured by a generating method. If both members are generated, then the surface scattering can be applied to both members. In case of a Formate bevel gearset, which has a generated pinion and a non-generated ring gear, the modification can only be applied to the generated pinion.

The inventive modification is applied in at least two levels. The first and higher level controls the maximal flank form deviation magnitude for each individual tooth. The first level modification control is preferably defined by a cosine function or by a normal distribution. Also other mathematical functions (e.g. higher order functions), sine functions or random distributions may be applied to the first level modification.

The second and lower level controls the modification on the individual tooth surface itself. The second level may be defined as a first order, a third order and/or a sinusoidal function. Also, other higher order functions as well as cosine functions, normal distributions or random distributions may be utilized. The second level modifications on each single tooth are not conducted by common spiral angle and pressure angle corrections, but with roll position dependent functions, which are developed based on the center point of the flanks. Center point developed modifications will not show tooth thickness or indexing errors.

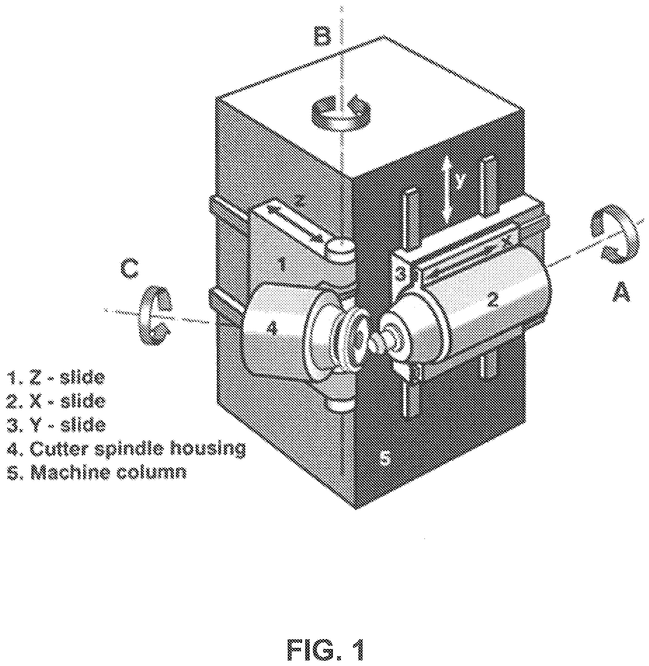

The inventive machining process modifies a single axis motion or multiple axes motions such as those available on a computer-controlled free-form bevel gear cutting or grinding machine (e.g. US 6,712,566) to superimpose the flank form (generated by the basic settings) with small modifications preferably in the single micron range. A principal design scheme of such a machine is shown in Figure 1 and comprises a six-axis free-form bevel gear grinding machine with a monolithic column as the base structure. The linear axes of motion are X, Y and Z which are preferably mutually perpendicular with respect to one another. The rotational axes of motion are A, B and C. A is the work piece spindle rotation, B is the swing axis (i.e. pivot axis) which adjusts the correct angular inclination between the tool axis and the work piece axis and C is the tool spindle rotation. The modifications are determined such that the average flank form of all the teeth of a gear with flank form scattering will be identical to a gear without any modifications. Due to the roll position dependency of the single tooth corrections, the tooth indexing and tooth thickness will not vary from tooth to tooth, as long as the reference roll position is identical or close to the tooth center point.

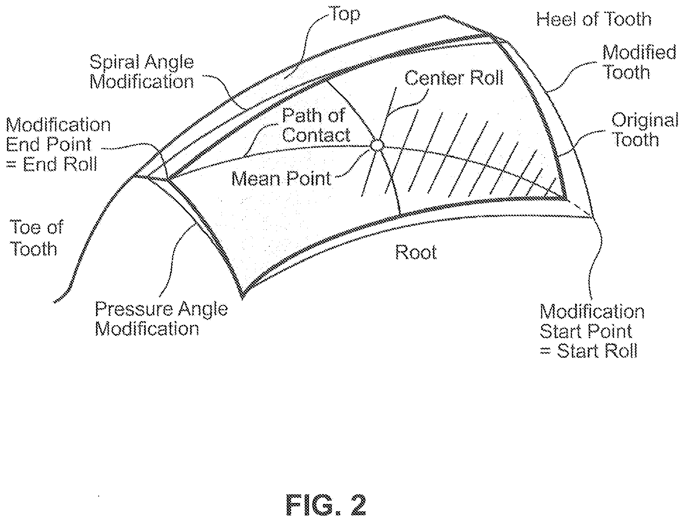

Conventionally, it is known that a change to the work piece axis (A-axis) rotation angle alone is equivalent to a change of the ratio of roll. The ratio of roll modification causes a combined spiral angle and pressure angle change as shown in Figure 2 which shows a three-dimensional view of a bevel gear tooth. A first order change of the A-axis rotation (depending on the distance of the actual roll position to the center roll position) removes lesser material (as required to machine the nominal flank surface) at the start roll position. The modification begins at the start roll position (heel-root in the drawing) and ends at the end roll position (toe-top in the drawing). There is no modification along the contact line which goes through the mean point of the flank. As the roll angle moves from start roll to center roll this amount becomes smaller and is zero along the contact line between tool and tooth flank at the center roll position. The contact lines between start roll and center roll are schematically shown in Figure 2. As the roll progresses from center roll to end roll, proportionally more material than required for the nominal flank surface is removed, which is represented by the modified surface defined by the spiral angle modification line and pressure angle modification line of Figure 2.

In the invention, one or more of the following machine motion modifications is preferably performed:

- A-axis angle modifications (angular movement about the workpiece axis A)
- Y-axis position modifications (linear movement in a direction parallel to the pivot axis B which is vertical in the machine configuration of Figure 1)
- X-axis position modifications (linear movement in a direction along axis A).

The modification axes A, Y and/or X are labeled in the machine structure shown in Figure 1.

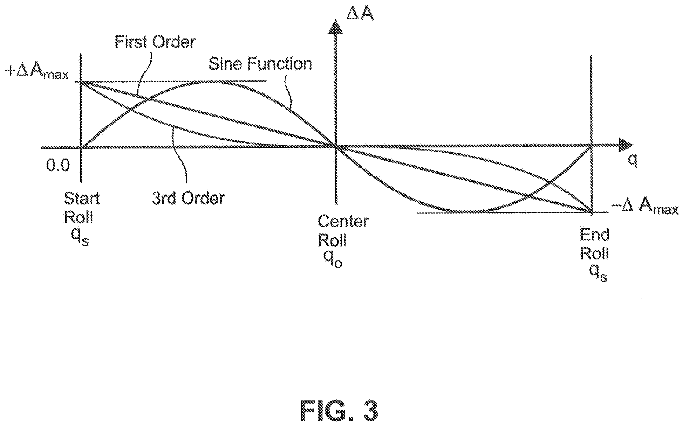

Figure 3 shows the modified material removal along the path of contact and perpendicular to the flank surface. In Figure 3, a first order change of the A-axis is graphically represented. In addition to, or instead of, first order changes, one or more other more complex functions can be realized. For example, third order functions as well as sinusoidal functions may be applied and these functions are also shown in Figure 3.

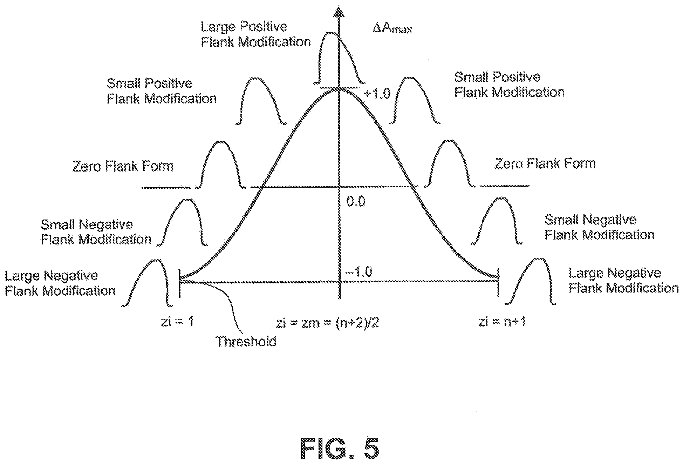

In a first step of the invention, the maximal modification amounts for each individual tooth are calculated in a first level of calculations. Figure 5 shows a normal distribution as a first level function, which determines the maximal modification amount for each tooth of the pinion or gear which is subject to the modifications. At tooth number 1 the maximal modification amount has a large negative value. From tooth to tooth this amount becomes more positive until it reaches a large positive value at tooth number zm which is at the top of the normal distribution graph. Increasing number of teeth show a reduction of the modification, until a large negative value is reached at tooth number n+1, which is one tooth more than the last tooth and, therefore, is equal to the first tooth.

The maximal modification amount for one particular tooth is calculated as a cosine function and/or as a normal distribution. Figure 5 shows symbolically how the tooth form changes from tooth to tooth, defined by the normal distribution. In Figure 5 only the maximal change of each tooth is shown.

Cosine First Level Function type: $\cos [\varphi]$:

The function should start at $\varphi = -\pi$ at the first tooth and end at $\varphi = +\pi$ at the last tooth plus 1. At the mean number of teeth $(n+2)/2$ (does not have to be integer) the argument $\varphi$ should be zero.

From these boundary conditions:

$$\varphi = -\pi \qquad \text{if} \qquad zi = 1$$

$$\varphi = +\pi \qquad \text{if} \qquad zi = n+1$$

$$\varphi = 0 \qquad \text{if} \qquad zi = zm$$

The cosine function becomes:

$$\cos[\varphi] = \cos[(n+2)/(-2) \cdot (2\pi/n)+zi \cdot (2\pi/n)] \qquad (1)$$

where:

$\varphi$      argument of cosine function
$zi$      actual tooth
$zm$      number of teeth at the middle of the function = $(n+2)/2$
$n$      number of teeth of target gear
$n+1$      number of teeth at the end of the function

The amplitude of the cosine function in equation (1) changes from -1 to +1. In order to receive an amplitude with the desired correction amount Corr normal to the flank surface, in case of a modified A-axis rotation the cosine function has to be multiplied with the following term:

$$\text{Corr}/(\cos \beta \cdot \cos \alpha \cdot RM \cdot \sin \gamma) \qquad (2)$$

where:

Corr      correction amount perpendicular to flank surface (user input)
$\beta$      spiral angle of member
$\alpha$      pressure angle of member
RM      mean cone distance
$\gamma$      root angle of member

The maximum A-axis modification amount for a respective tooth becomes:

$$\Delta A_{max}(zi) = \text{Corr}/(\cos\beta \cdot \cos\alpha \cdot RM \cdot \sin\gamma) \cdot \cos[(n+2)/(-2) \cdot (2\pi/n)+zi \cdot (2\pi/n)] \qquad (3)$$

where:

$\Delta A_{max}(zi)$      maximal A-axis modification amplitude for tooth zi

Normal Distribution as First Level Function type: $e^{-\eta}$ where:

$-\eta$      argument of Euler function

For the present 13 tooth example the function should start at tooth number $zi = 1$ with $\Delta A_{max} = 0.01463$ as the threshold value. The threshold value is controlled by the chosen 0.1 multiplier in the exponent which delivers in the present example 1.463% of the Euler function magnitude. This results in a desirable cutoff before the function travels to an infinitely far away zero value. It should also end at tooth number $zi = n+1$ with $\Delta A_{max} = 0.01463$ as the threshold value.

The exponent $-\eta$ is developed as $-\eta = 0.1 \cdot (zi-n/2-1)^2$ in order to fulfill the following boundary conditions:

with $zi = 1$ and $n = 13$ or $n/2 = 6.5$, it becomes $-\eta = -0.1 \cdot (1-6.5-1)^2 = -4.225$
also with $zi = n+1 = 14$ and $n/2 = 6.5$, it becomes $-\eta = 0.1 \cdot (14-6.5-1)^2 = -4.225$

in case of zi = n/2 = 6.5, it becomes -η = 0

With these definitions, the normal distribution becomes:

$$e^{-0.1(zi-n/2-1)^2} \qquad \text{(e.g. for zi = 1} \rightarrow e^{-0.1(6.5)^2} = 0.01463) \qquad (4)$$

In order to achieve a positive maximum of 1.0 and a minimum of (-1.0+2 • 0.02732) = -0.945 the Euler function is multiplied by 2 and shifted in ordinate direction by 1.0:

$$2 \cdot e^{-0.1\left(zi-\frac{n}{2}-1\right)^2} - 1 \qquad (5)$$

In order to receive an amplitude with the desired correction amount Corr normal to the flank surface, in case of a modified A-axis rotation the cosine function has to be multiplied with the following term from equation 2:

$$\text{Corr}/(\cos\beta \cdot \cos\alpha \cdot RM \cdot \sin\gamma)$$

The maximum A-axis modification amount for a respective tooth becomes:

$$\Delta A_{max}(zi) = \text{Corr}/(\cos\beta \cdot \cos\alpha \cdot RM \cdot \sin\gamma) \cdot [2 \cdot e^{-0.1(zi-n/2-1)^2}-1] \qquad (6)$$

It is significant that both first level functions start at tooth number 1 and end at tooth number n+1. If the function would end at the last tooth, number n, then the last tooth and the first tooth would receive the same modification which is not ideal with respect to the scattering effect. The resulting function from equation 5 is graphically shown in Figure 5. The function will reach the -1.0 magnitude in the positive and negative infinity. In order to design a useful normal distribution, the threshold at the desired starting and ending point of the function has to be defined.

The second level A-axis modifications are preferably determined along the path of contact of individual teeth and use the first level tooth to tooth magnitudes $\Delta A_{max}$ applied to a tooth bound modification function. Three example functions are shown in Figure 3.

The first order function boundary conditions are:

$$qs \le qj \le qe$$

if

$$qj = qs => \text{amplitude } \Delta A(zi,qj) = +1.0$$

if

$$qj = qe => \text{amplitude } \Delta A(zi,qj) = -1.0$$

with these boundary conditions the second level first order function (Figure 3) becomes:

$$\Delta A(zi,qj) = \Delta A_{max}(zi) \cdot 2 \cdot (qj-q_0)/(qs-qe) \qquad (7)$$

where:

$\Delta A(zi,qj)$      roll position depending ordinate value of the second level functions

The sinusoidal function boundary conditions are:

$$qs \leq qj \leq qe$$

if

$$qj = qs => \text{amplitude } \Delta A(zi,qj) = 0.0$$

if

$$qj = qe => \text{amplitude } \Delta A(zi,qj) = 0.0$$

if

$$qj = q_0 => \text{amplitude } \Delta A(zi,qj) = 0.0$$

$$\text{maximal amplitude between } qs \text{ and } q_0 => +1.0$$

$$\text{maximal amplitude between } q_0 \text{ and } qe => -1.0$$

with these boundary conditions the second level sinusoidal function (Figure 3) becomes:

$$\Delta A(zi,qj) = \Delta A_{max}(zi) \cdot \sin[2\pi \cdot (qj-q_0)/(qs-qe)] \qquad (8)$$

The third order function boundary conditions are:

$$qs \leq qj \leq qe$$

if

$$qj = qs => \text{amplitude } \Delta A(zi,qj) = +1.0$$

if

$$qj = qe => \text{amplitude } \Delta A(zi,qj) = -1.0$$

if

$$qj = q_0 => \text{amplitude } \Delta A(zi,qj) = 0.0$$

with these boundary conditions the second level third order function (Figure 3) becomes:

$$\Delta A(zi,qj) = \Delta A_{max}(zi) \cdot [8 \cdot (qj-q_0)^3/(qs-qe)^3] \qquad (9)$$

where:

$qs$    start roll position
$q_0$    center roll position

qe    end roll position

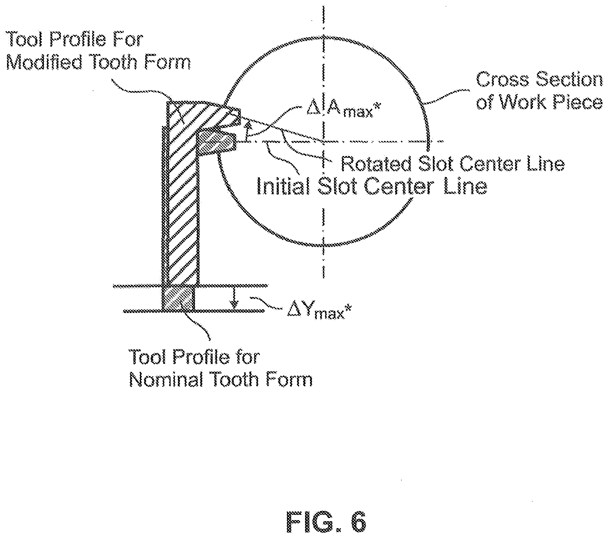

Instead of the combined spiral angle and pressure angle change by modifying the A-axis position as discussed above, a separate pressure angle change is also possible and can be applied solely or in addition to the A-axis change. The mechanism to create a pressure angle change requires a combined Y-axis position and A-axis rotational modification as shown in the two-dimensional drawing in Figure 6 which shows a simplified representation in order to explain a pressure angle change. This change is achieved by small rotation of the work axis (A-axis) and a connected Y-axis move. The Y-axis move is calculated such that the tool profile follows the tooth slot center line, thereby achieving a pressure angle change.

Analogous to the sole A-axis modification described above, the first level function is either a cosine function (equations (10) and (11)) and/or a normal distribution (equations (12) and (13)). In case of a pressure angle modification two functions for the level 1 modifications have to be defined, one for the A-axis modification and a second one for the Y-axis modification:

Cosine:

$$\Delta A^*_{max}(zi) = \Delta\alpha \cdot \cos[(n+2)/(-2) \cdot (2\pi/n) + zi \cdot (2\pi/n)] \qquad (10)$$

$$\Delta Y_{max}(zi) = -RM \cdot \Delta\alpha \cdot \cos[(n+2)/(-2) \cdot (2\pi/n) + zi \cdot (2\pi/n)] \qquad (11)$$

Normal Distribution:

$$\Delta A^*_{max}(zi) = \Delta\alpha \cdot [2 \cdot e^{-0.1(zi-n/2-1)^2} - 1] \qquad (12)$$

$$\Delta Y_{max}(zi) = -RM \cdot \Delta\alpha \cdot [2 \cdot e^{-0.1(zi-n/2-1)^2} - 1] \qquad (13)$$

where:

| | |
|---|---|
| $\Delta\alpha$ | angular correction amount to pressure angle (user input) |
| $\Delta A^*_{max}(zi)$ | maximal A-axis modification amplitude for tooth zi |
| $\Delta Y_{max}(zi)$ | maximal Y-axis modification amplitude for tooth zi |

For the separate pressure angle modification, the second level function can be a first order function, a sinusoidal function and/or a third order function. Here, only the example of a preferred sinusoidal function is presented for the two addressed axes A and Y:

$$\Delta A^*(zi,qj) = \Delta A^*_{max}(zi) \cdot \sin[2\pi \cdot (qj-q_0)/(qs-qe)] \qquad (14)$$

$$\Delta Y(zi,qj) = \Delta Y_{max}(zi) \cdot \sin[2\pi \cdot (qj-q_0)/(qs-qe)] \qquad (15)$$

where:

| | |
|---|---|
| $\Delta A^*(zi,qj)$ | roll position depending ordinate value of the second level functions |
| $\Delta Y(zi,qj)$ | roll position depending ordinate value of the second level functions |

An additional modification using the X-axis may be conducted as the only modification, or in combination with A-axis and/or Y-axis modifications. Analogous to the sole A-axis modifications discussed above, the first level function is either a cosine function (equation (16)) and/or a normal distribution (equation (17)).

Cosine:

$$\Delta X_{max}(zi) = \Delta X \cdot \cos[(n+2)/(-2) \cdot (2\pi/n) + zi \cdot (2\pi/n)] \qquad (16)$$

Normal Distribution:

$$\Delta X_{max}(zi) = \Delta X \cdot [2 \cdot e^{-0.1(zi-n/2-1)^2}-1] \qquad (17)$$

where:

$\Delta X$          X-axis correction amount (user input)

$\Delta X_{max}(zi)$      maximal X-axis modification amplitude for tooth zi

The second level function can be a first order function, a sinusoidal function and/or a third order function. Here, only the example of most preferred sinusoidal function is shown.

$$\Delta X(zi,qj) = \Delta X_{max}(zi) \cdot \sin[2\pi \cdot (qj-q_0)/(qs-qe)] \qquad (18)$$

where:

$\Delta X(zi,qj)$    roll position depending ordinate value of the second level functions

A Y-axis modification may also be conducted as the only modification preferably in accordance with equation (15). Analogous to the sole X-axis modifications above, the first level function is either a cosine function (equation (16)) and/or a normal distribution (equation (17)). The second level function can be a first order function, a sinusoidal function and/or a third order function.

In order to provide second level tooth bound functions which can be optimized and adjusted regarding their amplitude and their wave length, the following equation (19) was developed. This equation only applies to the sinusoidal flank form modification:

$$qm = (qs+qe)/2$$

$$qs \le qj < qm \quad => \quad f = f_{Toe}\,(user\ input)\ ;\ \ Amp = A_{Toe}\,(user\ input)$$

$$qm \le qj < qe \quad => \quad f = f_{Heel}\,(user\ input)\ ;\ \ Amp = A_{Heel}\,(user\ input)$$

$$\Delta A(zi,qj) = \Delta A_{max}(zi) \cdot Amp \cdot \sin[2\pi f \cdot (qj-qm)/(qs-qe)] \qquad (19)$$

where:

qm       mean roll position

tToe      frequency toe section

fHeel     frequency heel section

f         actual frequency

AToe      amplitude in toe section

AHeel    Amplitude in heel section

Amp      actual amplitude

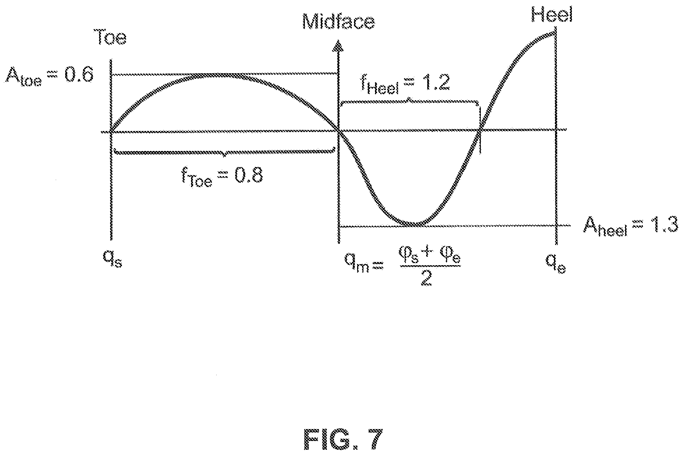

A visualization of the control parameters for the wavelength and the amplitude is given in Figure 7 which shows a diagram with a split sine function. The first half of the function begins at qs and ends at qm. This first half function has an amplitude of 0.6 and a frequency of 0.8 (extended wave length). The second half of the function begins at qm and ends at qe. This second half function has an amplitude of 1.3 and a frequency of 1.2 (reduced wave length). The graph of Figure 7 is based on the definition that a standard sine function has an amplitude of 1.0 and a frequency of $1/(2\pi)$ equal a wave length of $2\pi$.

Between toe and midface, the frequency factor free is 0.8 (longer wavelength). Between midface and heel, the frequency factor foeei is 1.2 (shorter wavelength). At this point the mean roll position is introduced. The center roll position is in case of hypoid pinions not at the geometrical center of the flanks. The mean roll position can assure a more centric second level modification function.

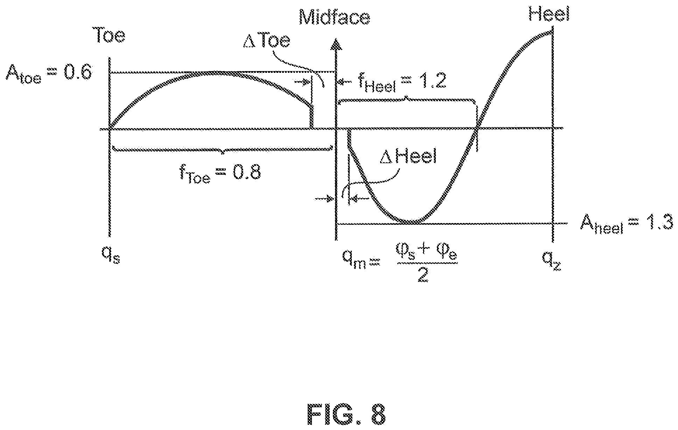

Preferably, a dwell is introduced at, and preferably adjacent to, the center of the second level function. The second level function has a zero amplitude at midface (center of the face width) at the center of roll position of the generating roll. In a coordinate measurement, the grid center point is used to determine the tooth to-tooth indexing error. In most practical cases, the grid center point will not match exactly the center of roll position but has a slightly different position. In order to avoid the introduction of tooth-to-tooth indexing errors, it is preferred that the second level function has a zero amplitude at the location of the measurement grid center point. This is preferably achieved with a toe dwell section and a heel dwell section. Figure 8 shows the toe dwell section ΔToe between center of roll (midface) and toe and the heel dwell section ΔHeel between center of roll and the heel. When the machining takes place within the two dwell sections, the second level function is effectively turned off and no modification to the flank surface is machined (second level function has zero amplitude within the dwell sections). The preferred amounts of the toe and heel dwell sections are between 0° and 4° of roll.

Equation (19) can be applied to the sole A-axis modification (equation (8)), to the pressure angle modification (equation (14) and (15)) and to the X-axis modification (equation (18)).

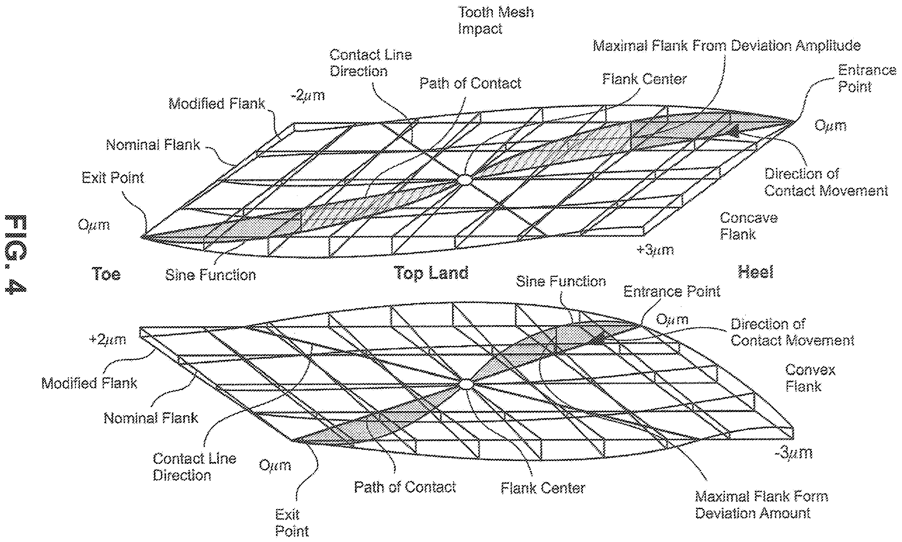

Figure 4 shows an example of a sinusoidal flank form modification of a generated bevel pinion represented on a symbolized three-dimensional tooth with a 9x5 surface point measurement grid.

The basic data of the bevel gear set of which the pinion represented in Figure 4 is a member is as follows:

| Method | Generated Pinion - Non-Generated Ring Gear |
| --- | --- |
| Number of Teeth Pinion | 13 |
| Number of Teeth Gear | 41 |
| Transverse Module at Heel | 5.00 mm |
| Spiral Angle Pinion | 45° |
| Spiral Angle Gear | 29° |
| Pressure Angle Pinion convex | 22° |
| Pressure Angle Pinion Concave | 18° |
| Pressure Angle Gear convex | 18° |
| Pressure Angle Gear Concave | 22° |
| Hypoid Offset | 25.4 mm |
| Nominal Cutter Diameter | 127 mm (5 inch) |

In the example, a grinding wheel is rotated about axis C (Figure 1) and is moved relative to a workpiece so as to engage the tool with tooth surfaces of the workpiece (e.g. opposing tooth surfaces of a tooth slot). The grinding wheel and workpiece are moved relative to one another in a generating motion (i.e. roll) wherein the workpiece rolls relative to the grinding wheel (representing a tooth of the theoretical generating gear) to finish the profile and lead of the workpiece tooth surface. During the generating roll, the computer controlled (e.g. CNC) free form machine (e.g. Figure 1) changes its axes positions to direct the grinding wheel and workpiece along the appropriate paths of motion relative to one another to perform the generating roll to produce the desired tooth surface modifications. In the example of Figure 4, tooth surface modifications are introduced by a modification to the A-axis (workpiece axis in Figure 1) defined by a normal distribution as a first level function and a sinusoidal function as a second level function. An example of such an A-axis modification being defined by equation (8).

The convention used in Figure 4 is consistent with the standard output of coordinate measurements for gear metrology. The path of contact is drawn from heel-root to toe-top on the concave tooth flank and from the heel-top to the toe root on the convex tooth flank. The flat planes are the nominal flanks and the wobbled surfaces represent the modified surfaces. The sine function can be recognized along the path of contact. Along the contact line direction all modification values are equal, which leads to the three-dimensional modification function.

Figure 4 shows that the modifications are zero in the flank center and at the entrance and exit points. The maximal flank form deviation amplitude is marked in Figure 4 as the amplitude of the sine function. In spite of sizable sine function amplitude of 10 microns, the corner point deviations have desirable low amounts between zero and 3 microns. The tooth contact sweeps along the path of contact from entrance to exit. The instantaneous contact area is a line or a slim ellipse which is oriented in contact line direction. The active contact length in path of contact direction under light load is between the maximum and minimum point of the sine function (area with hash marks in the upper graphic labeled concave flank). The active contact area only covers about 50% of the tooth flank. The reason is the neighboring tooth pairs carry the load before and after these transfer points. In case of the sine function modification, the tooth mesh impact (marked in Figure 4) happens in the area of zero slopes. Other functions, like the first order modifications show a slope in the impact area which worsens the impact condition. The sinusoidal tooth form variation changes the impact timing from tooth to tooth without worsening the impact conditions compared to the nominal flank form. This, in addition to the fact that the flank center point always stays unmodified, presents the optimal condition to achieve a psychoacoustic noise reduction without causing indexing errors or strength reducing edge contact.

Preferred results of the inventive manufacturing method are achieved when the first level tooth to tooth control of the maximum amount follows a normal distribution and when the second level control of the individual tooth modification follows a sinusoidal function. Sinusoidal second level modifications only cause very small tooth corner point deviations to a range of 5 microns, compared to twice this amount with the state of the art method. Furthermore, the second level modifications are driven by the roll position, relative to the center roll position or relative to any chosen roll position (for example the mean roll position). This means that at the center roll position (or the mean roll position) there will be the original flank surface present. Because the tooth spacing (or indexing) as well as the tooth thickness are measured at the tooth center point, the inventive machining method will not cause any indexing or tooth thickness errors.

A closer study of Figure 4 makes it also evident that a sinusoidal function which is oriented in path of contact direction (= direction of contact movement), will reduce the risk of edge contact and compensate for small misalignments between pinion and gear.

Although the invention has been discussed with respect to modifications in the A, Y and/or X directions of motion, the invention is also applicable to the B and/or Z directions of motion. For grinding of bevel gears, the rotation of the tool about axis C is independent from all other motions and the generating method is not dependent on the C-axis rotational motion. Therefore, the present invention is not applicable to the C-axis motion.

While the inventive method has been discussed with respect to grinding, other generating processes such as cutting, skiving and grinding-from-solid may be utilized to produce the inventive modified flank forms. Furthermore, the inventive method is applicable to machining processes wherein both opposing tooth flank surfaces of a tooth slot are machined simultaneously or wherein only one tooth flank surface of a tooth slot is machined at a time.

While the invention has been described with reference to preferred embodiments it is to be understood that the invention is not limited to the particulars thereof. The present invention is intended to include modifications which would be apparent to those skilled in the art to which the subject matter pertains without deviating from the scope of the appended claims.

## Claims

1. A method of producing a tooth flank surface on gear teeth by controlled removal of stock material from a work gear with a tool, said work gear and said tool being movable with respect to one another along and/or about a plurality of axes, said method comprising:

    engaging said tool with said work gear,
    moving said tool and said work gear relative to one another in a generating motion along and/or about said plurality of axes,
    removing stock material from the work gear to produce the tooth surface on said work gear,
    wherein the generating motion along and/or about said plurality of axes comprises motion along and/or about at least one of the axes, said motion being defined by a function comprising a first level component and a second level component, said first level component defining a maximum flank form deviation amplitude for each individual tooth of the work gear, and said second level component defining a modification of the tooth surface of each tooth of the work gear.

2. The method of claim 1, further comprising:

    providing a gear producing machine, said machine having plurality of axes and comprising a work piece spindle rotatable about a work axis A and a tool spindle rotatable about a tool axis C, said work piece spindle and said tool spindle being movable with respect to one another along at least one of linear axes X, Y and Z and about a pivot axis B,
    providing said work gear on said work piece spindle,
    providing said tool on said tool spindle,
    wherein said function defines a modified motion comprised by said generating motion.

3. The method of claim 2 wherein said modified motion comprises motion along and/or about at least one of:

angular motion about workpiece axis A,
linear motion X in the direction of workpiece axis A, and
linear motion Y in a direction parallel to pivot axis B.

4. The method of claim 3 wherein linear motion Y is in a vertical direction.

5. The method of any of claims 1 to 4 wherein the first level component comprises at least one of a cosine function and a normal distribution.

6. The method of any of claims 1 to 5 wherein the second level component is determined along the path of contact of each tooth of the work gear.

7. The method of claim 6 wherein determination of the second level component includes tooth to tooth magnitudes obtained from the first level component.

8. The method of claim 7 wherein the tooth to tooth magnitudes are applied to a tooth bound modification function comprising at least one of:

   a first order function,
   a sinusoidal function, and
   a third order function.

9. The method of claim 2 further comprising introducing a dwell section in the second level function, said dwell section being located at least at a center of roll position of the generating roll, wherein within said dwell section, the second level function has an amplitude of zero.

10. The method of claim 9 wherein the dwell comprises at least one of a toe dwell section and a heel dwell section, with the toe dwell section being located between the center of roll position and a toe end of a tooth and the heel dwell section being located between the center of roll position and a heel end of the tooth.

11. The method of claim 10 wherein each of the toe dwell section and the heel dwell section extend between 0° and 4° of the generating roll.

12. The method of claim 2 wherein said tool comprises a grinding wheel.

13. The method of claim 2 wherein the first level component comprises a normal distribution and the second level component comprises a sinusoidal function.


**Patentansprüche**

1. Verfahren zum Herstellen einer Zahnflankenfläche an Zahnradzähnen durch gesteuertes Abtragen von Rohmaterial von einem Werkrad mit einem Werkzeug, wobei das Werkrad und das Werkzeug relativ zueinander entlang und/oder um eine Vielzahl von Achsen beweglich sind, wobei das Verfahren Folgendes umfasst:

   Eingreifen des Werkzeugs mit dem Werkrad,
   Bewegen des Werkzeugs und des Werkrads relativ zueinander in einer erzeugenden Bewegung entlang und/oder um die Vielzahl von Achsen,
   Entfernen von Rohmaterial von dem Werkrad, um die Zahnoberfläche auf dem Werkrad zu erzeugen,
   wobei die erzeugende Bewegung entlang und/oder um die Vielzahl von Achsen eine Bewegung entlang und/oder um wenigstens eine dieser Achsen umfasst, wobei die Bewegung durch eine Funktion definiert ist, die eine Komponente eines ersten Niveaus und eine Komponente eines zweiten Niveaus umfasst, wobei die Komponente des ersten Niveaus eine maximale Flankenformabweichungsamplitude für jeden einzelnen Zahn des Werkrads definiert und die Komponente des zweiten Niveaus eine Modifikation der Zahnoberfläche jedes Zahns des Werkrads definiert.

2. Verfahren nach Anspruch 1, das ferner Folgendes umfasst:

Bereitstellen einer zahnraderzeugenden Maschine, wobei die Maschine eine Vielzahl von Achsen aufweist und eine Werkstückspindel umfasst, die sich um eine Arbeitsachse A drehen kann, sowie eine Werkzeugspindel, die sich um eine Werkzeugachse C drehen kann, wobei die Werkstückspindel und die Werkzeugspindel in Bezug aufeinander entlang mindestens einer der linearen Achsen X, Y und Z sowie um eine Schwenkachse B beweglich sind,

Bereitstellen des Werkrades auf der Werkstückspindel,

Bereitstellen des Werkzeugs auf der Werkzeugspindel;

wobei die Funktion eine modifizierte Bewegung definiert, die in der erzeugenden Bewegung umfasst ist.

3. Verfahren nach Anspruch 2, wobei die modifizierte Bewegung mindestens eines der Folgenden umfasst:

eine Winkelbewegung um die Werkstückachse A,

eine lineare Bewegung X in der Richtung der Werkstückachse A, und

eine lineare Bewegung Y in einer Richtung parallel zur Schwenkachse B.

4. Verfahren nach Anspruch 3, wobei die lineare Bewegung Y in einer vertikalen Richtung erfolgt.

5. Verfahren nach einem der Ansprüche 1 bis 4, wobei die Komponente des ersten Niveaus eine Sinusfunktion und/oder eine Normalverteilung umfasst.

6. Verfahren nach einem der Ansprüche 1 bis 5, wobei die Komponente des zweiten Niveaus entlang des Berührungspfades jedes Zahns des Werkrads bestimmt wird.

7. Verfahren nach Anspruch 6, wobei die Bestimmung der Komponente des zweiten Niveaus die aus der Komponente des ersten Niveaus erhaltenen Zahn-zu-Zahn-Größen enthält.

8. Verfahren nach Anspruch 7, wobei die Zahn-zu-Zahn-Größen auf eine zahngebundene Modifikationsfunktion angewendet werden, die mindestens eines von Folgendem umfasst:

einer Funktion erster Ordnung,

einer sinusförmigen Funktion, und

einer Funktion dritter Ordnung.

9. Verfahren nach Anspruch 2, das ferner das Einführen eines Verweilabschnitts in die Funktion des zweiten Niveaus umfasst, wobei sich der Verweilabschnitt mindestens in der Mitte der Walzenposition der erzeugenden Walze befindet, wobei die Funktion des zweiten Niveaus innerhalb des Verweilabschnitts eine Amplitude von Null aufweist.

10. Verfahren nach Anspruch 9, wobei der Verweilabschnitt mindestens einen von einem Zehenverweilabschnitt und einem Fersenverweilabschnitt umfasst, wobei der Zehenverweilabschnitt zwischen der Mitte der Walzposition und einem Zehenende eines Zahns angeordnet ist und der Fersenverweilabschnitt zwischen der Mitte der Walzposition und einem Fersenende des Zahns angeordnet ist.

11. Verfahren nach Anspruch 10, wobei sich sowohl der Zehenverweilabschnitt als auch der Fersenverweilabschnitt zwischen 0° und 4° der erzeugenden Walze befinden.

12. Verfahren nach Anspruch 2, wobei das Werkzeug eine Schleifscheibe umfasst.

13. Verfahren nach Anspruch 2, wobei die Komponente des ersten Niveaus eine Normalverteilung umfasst und die Komponente des zweiten Niveaus eine Sinusfunktion umfasst.

**Revendications**

1. Procédé de production d'une surface de flanc de dent sur des dents de roues par enlèvement contrôlé de matière d'une roue à usiner à l'aide d'un outil, ladite roue à usiner et ledit outil étant mobiles l'un par rapport à l'autre le long d'une pluralité d'axes et/ou autour de ces axes, ledit procédé comprenant les opérations consistant à :

mettre en contact ledit outil et ladite roue à usiner,

déplacer ledit outil et ladite roue à usiner l'un par rapport à l'autre dans un mouvement de génération le long de la pluralité d'axes et/ou autour de ces axes, et

enlever du matériau de la roue à usiner pour produire la surface des dents sur ladite roue à usiner, ledit mouvement de génération le long de ladite pluralité d'axes et/ou autour de ces axes comprenant un mouvement le long d'au moins un de ces axes et/ou autour de celui-ci, ledit mouvement étant défini par une fonction comprenant une composante de premier niveau et une composante de deuxième niveau, ladite composante de premier niveau définissant une amplitude maximale de déviation de forme de flanc pour chaque dent individuelle de la roue à usiner, et ladite composante de deuxième niveau définissant une modification de la surface de chaque dent de la roue à usiner.

2. Procédé selon la revendication 1, comprenant en outre :

la fourniture d'une machine de production d'engrenages, ladite machine ayant une pluralité d'axes et comprenant une broche de pièce à usiner pouvant tourner autour d'un axe d'usinage A et une broche d'outil pouvant tourner autour d'un axe d'outil C, ladite broche de pièce à usiner et ladite broche d'outil étant mobiles l'une par rapport à l'autre le long d'au moins l'un des axes linéaires X, Y et Z et autour d'un axe de pivotement B, la fourniture de ladite roue à usiner sur ladite broche de pièce à usiner, la fourniture d'un outil sur ladite broche d'outil ; ladite fonction définissant un mouvement modifié faisant partie dudit mouvement générateur.

3. Procédé selon la revendication 2, dans lequel ledit mouvement modifié comprend :

un mouvement angulaire autour de l'axe de la pièce A, et/ou
un mouvement linéaire X dans la direction de l'axe de la pièce A, et/ou
un mouvement linéaire Y dans une direction parallèle à l'axe de pivotement B.

4. Procédé selon la revendication 3, dans lequel le mouvement linéaire Y est dans la direction verticale.

5. Procédé selon l'une quelconque des revendications 1 à 4, dans lequel la composante de premier niveau comprend une fonction cosinus et/ou une distribution normale.

6. Procédé selon l'une quelconque des revendications 1 à 5, dans lequel la composante de deuxième niveau est déterminée le long de la voie de contact de chaque dent de la roue à usiner.

7. Procédé selon la revendication 6, dans lequel la détermination de la composante de deuxième niveau comprend les grandeurs dent à dent obtenues à partir de la composante de premier niveau.

8. Procédé selon la revendication 7, dans lequel les grandeurs dent à dent sont appliquées à une fonction de modification liée à une dent comprenant :

une fonction du premier ordre, et/ou
une fonction sinusoïdale, et/ou
une fonction de troisième ordre.

9. Procédé selon la revendication 2, comprenant en outre l'introduction d'une section de pause dans la fonction de deuxième niveau, ladite section de pause étant située au moins au niveau d'une position centrale du roulement de génération, ladite fonction de deuxième niveau ayant une amplitude de zéro au sein de ladite section de pause.

10. Procédé selon la revendication 9, dans lequel la section de pause comprend une section de pause de pointe et/ou une section de pause de talon, la section de pause de pointe étant située entre la position centrale de roulement et une extrémité de pointe d'une dent et la section de pause de talon étant située entre la position centrale de roulement et une extrémité de talon de la dent.

11. Procédé selon la revendication 10, dans lequel la section de pause de pointe et la section de pause de talon couvrent chacune entre 0° et 4° du roulement de génération.

12. Procédé selon la revendication 2, dans lequel ledit outil comprend une meule.

**13.** Procédé selon la revendication 2, dans lequel la composante de premier niveau comprend une distribution normale et la composante de deuxième niveau comprend une fonction sinusoïdale.

1. Z - slide
2. X - slide
3. Y - slide
4. Cutter spindle housing
5. Machine column

FIG. 1

**FIG. 2**

FIG. 3

Tooth Mesh Impact

Maximal Flank From Deviation Amplitude
Entrance Point
0 μm
Direction of Contact Movement
Concave Flank
Heel
Flank Center
+3 μm
Contact Line Direction
Path of Contact
Top Land
Sine Function
Modified Flank
−2 μm
Nominal Flank
Exit Point
0 μm
Toe
Sine Function

Direction of Contact Movement
Convex Flank
−3 μm
Maximal Flank Form Deviation Amount
Entrance Point
0 μm
Flank Center
Sine Function
Path of Contact
Flank Center
Exit Point
0 μm
Contact Line Direction
Nominal Flank
Modified Flank
+2 μm

**FIG. 4**

FIG. 5

Tool Profile For
Modified Tooth Form

Cross Section
of Work Piece

$\triangle A_{max}*$

Rotated Slot Center Line

Initial Slot Center Line

$\triangle Y_{max}*$

Tool Profile for
Nominal Tooth Form

FIG. 6

FIG. 7

$$A_{toe} = 0.6$$

Toe

$\Delta$Toe

Midface

Heel

$f_{Heel} = 1.2$

$f_{Toe} = 0.8$

$\Delta$Heel

$A_{heel} = 1.3$

$q_s$

$q_m = \dfrac{\varphi_s + \varphi_e}{2}$

$q_z$

## FIG. 8

## REFERENCES CITED IN THE DESCRIPTION

**Patent documents cited in the description**

- US 6712566 B

- EP 0784525 A1

**Non-patent literature cited in the description**

- **GOLDRICH.** CNC Generation of Spiral Bevel and Hypoid Gears: Theory and Practice. The Gleason Works, 1990